# EUROPEAN PATENT APPLICATION

(11) **EP 2 886 913 A1**
(43) Date of publication of application: **24.06.2015**
(21) Application number: 13822957.0
(22) Date of filing: 18.07.2013
(51) Int. Cl.: F16J 15/16, C08J 7/00, C08K 3/00, C08L 27/18

(54) **FLUORINE-RESIN SEALING RING**

(30) Priority: 25.07.2012 JP 2012164595
(71) Applicant: NOK Corporation, Minato-ku Tokyo 105-8585 (JP)
(72) Inventor: FUKASAWA Kiyofumi, Fujisawa-shi Kanagawa 251-0042 (JP); KOGA Akiko, Fujisawa-shi Kanagawa 251-0042 (JP); SUZUKI Akihiro, Fujisawa-shi Kanagawa 251-0042 (JP); KURIYAMA Hideki, Fujisawa-shi Kanagawa 251-0042 (JP)
(74) Representative: Beckmann, Claus
(86) International application number: PCT/JP2013/069503
(87) International publication number: WO 2014/017375

(57) **Abstract**

A PTFE resin seal ring in which at least one surface of an abutting part that forms a discontinuous part of the seal ring is treated by plasma modification using non-polymerizable gas under pressure conditions of 10 to 500 Pa during plasma irradiation. Since the abutting surfaces of the PTFE resin seal ring are treated with low-pressure plasma, and the state of CF bonds in the surface portion is changed, sticking does not occur in the abutting part even after constant load is applied at a high temperature. Thus, the PTFE resin seal ring of the present invention exhibits excellent effects of ensuring sealing properties under pressure and slidability under ordinary pressure, and is effectively used as a sealing material in, for example, rotation or reciprocation, including hydraulic circuits such as automatic transmissions (A/T) and continuously variable transmissions (CVT) for vehicles.

## Description

### TECHNICAL FIELD

The present invention relates to a fluororesin seal ring. More particularly, the present invention relates to a fluororesin seal ring that can prevent welding between fluororesin members.

### BACKGROUND ART

Resin seal rings are currently used in rotation or reciprocation, including hydraulic circuits such as automatic transmissions (A/T) and continuously variable transmissions (CVT) for vehicles. Such a resin seal ring generally comprises an abutting part, which is as a discontinuous part, in a part of the ring so as to ensure mountability to an annular groove, sealing properties under pressure, and slidability under ordinary pressure. The seal ring is designed so that when the seal ring is mounted, a slight circumstantial gap (abutting gap) is formed in the abutting part. As the temperature of the sealed fluid increases, the seal ring is thermally expanded, and the gap in the abutting part gradually narrows, leading to a state in which the cut surfaces of the abutting part are butted together. For example, a seal ring having a straight cut shape prevents the sealed fluid from leaking when the abutting gap is zero, thus exhibiting excellent sealing properties.

However, when the temperature of the sealed fluid further increases, and the seal ring is further expanded, compressive stress acts on the abutting portion. In such a state in which constant load is applied at a high temperature, compression set occurs at a stress lower than the stress in which plastic yield occurs. The abutting part is deformed (crept) as time passes, and finally stuck. It is known that this phenomenon not only depends on the temperature of the sealed fluid, but also is more likely to occur due to frictional heat generated when the abutting surfaces grind against each other because of vibration of a hydraulic system under pressurized conditions, and the like. If the abutting part is crept and stuck in that state, the crept or stuck part does not return to the original shape even after the temperature of the sealed fluid decreases. This has an adverse influence on the mounting state of the seal ring, causing a reduction in sealing properties during low-temperature operation.

In order to cope with the above problems, the present applicant proposes a seal ring material obtained by adding oil coke and carbon fiber to a fluororesin (Patent Document 1). The seal ring produced from this material has improved creep resistance; however, the fluororesins may stick together under conditions in which frictional heat is generated under pressure. In order to prevent sticking between the fluororesins, the fluororesin surface may be treated with a liquid coating agent. However, liquid coating agents generally have poor adhesion to fluororesins, and the coating film itself is highly likely to be welded and melted due to frictional heat.

### PRIOR ART DOCUMENT

### PATENT DOCUMENT

Patent Document 1 : JP-A-2003-035367
Patent Document 2 : JP-A-2010-203546
Patent Document 3 : JP-A-2010-249219
Patent Document 4 : JP-A-2003-182615
Patent Document 5 :WO 2007/043622
Patent Document 6 : JP-A-2006-176544
Patent Document 7 : JP-A-2005-232196
Patent Document 8 : JP-A-2002-317089
Patent Document 9 : JP-A-2001-294720
Patent Document 10 : JP-A-2007-154170
Patent Document 11 : JP-A-2000-9228
Patent Document 12 : JP-A-2002-161181
Patent Document 13 : JP-A-10-45989
Patent Document 14 : JP-A-62-109844
Patent Document 15: JP-A-2-32146
Patent Document 16 : JP-A-2000-1589
Patent Document 17 : JP-A-2003-261698

### OUTLINE OF THE INVENTION

### PROBLEM TO BE SOLVED BY THE INVENTION

An object of the present invention is to provide a PTFE resin seal ring in which the surfaces of its abutting part that forms a discontinuous part of the seal ring do not become sticky even after constant load is applied at a high temperature.

### MEANS FOR SOLVING THE PROBLEM

The above object of the present invention can be achieved by a PTFE resin seal ring in which at least one surface of an abutting part that forms a discontinuous part of the seal ring is treated by plasma modification using non-polymerizable gas under pressure conditions of 10 to 500 Pa during plasma irradiation.

### EFFECT OF THE INVENTION

Since the abutting surfaces of the PTFE resin seal ring of the present invention are treated with low-pressure plasma, and the state of CF bonds in the surface portion is changed, sticking does not occur in the abutting part even after constant load is applied at a high temperature. Thus, the PTFE resin seal ring of the present invention exhibits excellent effects of ensuring sealing properties under pressure and slidability under ordinary pressure, and is effectively used as a sealing material in, for example, rotation or reciprocation, including hydraulic circuits such as automatic transmissions (A/T) and continuously variable transmissions (CVT) for vehicles.

### EMBODIMENTS FOR CARRYING OUT THE INVENTION

A preferably used seal ring is a PTFE resin seal ring that can be continuously used in a wide temperature range of -200 to +260°C, has excellent heat resistance and cold resistance, has a friction coefficient as very low as 0.04 to 0.3, and has excellent abrasion resistance. Usable examples of PTFE include not only homo-PTFE, but also PTFE partially (several mol% or less) modified with a monomer containing a polyfluoroalkyl group, such as fluoroalkyl vinyl ether and hexafluoropropylene, or ethylene, etc.

It is known that PTFE containing various fillers can be used for various applications. In the present invention, a filler can be used generally in an amount of about 70 wt.% or less, preferably about 1 to 30 wt.%, in the total amount of PTFE and the filler, although it varies depending on the type and properties of the filler. For example, the following fillers can be contained in PTFE. These fillers can be used in combination of two or more.

### Glass fiber: see Patent Documents 4 and 5.

Generally, glass fiber having an average fiber diameter of about 1 to 50 µm, preferably about 5 to 15 µm, and an average fiber length of about 10 to 1,000 µm, preferably about 50 to 200 µm, is used. It is preferable that the surface of such glass fiber is previously treated with a silane coupling agent, etc., and then used.

### Carbon fiber: see Patent Documents 1 and 5 to 9.

Usable examples include pitch-based carbon fiber, rayon-based carbon fiber, polyacrylonitrile-based carbon fiber, and the like, preferably pitch-based carbon fiber, particularly preferably highly graphitized pitch-based carbon fiber, generally having an average fiber diameter of about 1 to 50 µm, preferably about 5 to 20 µm, particularly preferably about 7 to 15 µm, and an average fiber length of about 10 to 1,000 µm, preferably about 20 to 500 µm, particularly preferably about 50 to 200 µm.

### Ceramic fiber or ceramic powder: see Patent Document 10.

Usable examples include fiber or powder of SiC, Al₂O₃, WC, Y₂O₃, MgO, SiO₂, Si₃N₄, ZrO₂, or the like, generally having an average particle diameter of about 0.4 to 100 µm, preferably about 0.7 to 30 µm.

### Graphite powder: see Patent Documents 9, 11, and 15.

Both natural graphite (earthy, massive, powdery, or other form of graphite) and artificial graphite can be used. The average particle diameter thereof is generally 30 µm or less, although it depends on their properties.

### Coke: see Patent Documents 1, 7, 8, and 14.

Usable examples include coal coke, petroleum coke, and the like, having an average particle diameter of about 1 to 200 µm, preferably 10 to 50 µm, particularly preferably about 3 to 30 µm.

### Carbon beads: see Patent Documents 8, 12, and 13.

Preferably, carbon beads obtained by using an aromatic polymer as a starting material, generally having an average particle diameter of about 3 to 30 µm, preferably about 10 to 20 µm, are used.

### Carbon black:

Ketchen black, thermal grade carbon black, and the like, having an arithmetic average particle diameter of about 70 to 90 nm are used.

### Bronze powder: see Patent Documents 15 and 16.

A Cu alloy containing 2 to 35 wt.% of Sn, for example, an alloy having a composition of Cu: 85 to 98 wt.%, preferably 88 to 92 wt.%, and Sn: 2 to 15 wt.%, preferably 8 to 12 wt.%, or an alloy having a Cu/Cr ratio of approximately 9:1, generally having an average particle diameter of about 10 to 50 µm, is used.

Plasma modification is performed on at least one surface of the abutting part of the seal ring using a low-pressure plasma device. Specifically, this treatment is performed by placing the seal ring in a vacuum chamber in a state where the abutting surfaces of the seal ring are not joined together, evacuating the chamber (vacuum chamber) to a predetermined degree of vacuum by a vacuum pump, generally 5 to 100 Pa or below, then introducing non-polymerizable gas, and applying predetermined electric power for a certain period of time using a high-frequency power supply at a predetermined frequency. The abutting part of the seal ring as mentioned herein is a discontinuous part provided in a part of the ring. The surfaces indicate the opposing surfaces in the abutting part, and examples of the shape include straight cut, stair-like step cut, special step cut, oblique bias cut, and the like. For example, an example of the straight cut shape is disclosed in Patent Document 1, and examples of the special step cut shape are disclosed in Patent Documents 2 and 3.

An example of the low-pressure plasma device is one in which a lower electrode and an upper electrode are disposed in a vacuum chamber so as to face each other, and at least one of the electrodes is connected to a high-frequency power supply or a microwave power supply.

Plasma irradiation is performed, for example, by reducing the pressure in the system to 5 to 100 Pa or below by a vacuum pump, introducing non-polymerizable gas of non-reactive gas, such as argon, helium, and nitrogen; reactive gas, such as oxygen so that the pressure in the vacuum chamber is 10 to 500 Pa, preferably 20 to 100 Pa, and supplying electric power of about 10 to 30,000 W for 1 to 30 minutes using a high-frequency power supply with a frequency of 40 kHz or 13.56 MHz, or a microwave power supply with a frequency of 2.45 GHz. For example, when argon is used as the non-polymerizable gas, the surface structure of polytetrafluoroethylene is modified, and surface etching is performed. Among the above conditions, conditions other than pressure, that is, the type of gas used, the power source plasma excitation electric field frequency, the electric power, and the temperature condition and time condition of irradiation, are not particularly limited. In contrast, when plasma irradiation is performed at a pressure other than the above range, plasma is not stably generated.

Application of the plasma irradiation treatment only to the surfaces of the abutting part having various shapes is performed in a state where the seal ring opens so that the plasma irradiation treatment is applied only to at least one of the facing surfaces in the abutting part of the seal ring.

When the plasma irradiation treatment is applied to only one surface of the abutting part of the seal ring, it is necessary to previously cover the other surface with a film, etc. In order to avoid such a complicated process, it is desirable that the plasma irradiation treatment is applied to both facing surfaces of the abutting part.

Patent Document 17 discloses a surface modification method in which a molded product comprising a fluororesin as a main component is treated with plasma irradiation at a pressure of 1.5 to 25 Pa. However, the fluororesin molded product as treated above is reportedly able to strongly adhere to other members, and there is no technical idea of preventing fluororesin members from sticking.

Although the plasma-treated surface is not changed up to the expression of organic functional groups by elimination of fluoric acid as in Patent Document 2, which aims to ensure adhesion, its state of CF bonds is changed. This state can be confirmed by XPS (X-ray photoelectron spectroscopy).

### EXAMPLES

The following describes the present invention with reference to Examples.

### Example 1

PTFE (G163, produced by Asahi Glass Co. Ltd.; 68 wt.%), 30 wt.% of glass fiber (CSX-3J-451S, produced by Nitto Boseki Co. Ltd.), and 2 wt.% of oil coke (produced by Chuetsu Graphite Works Co. Ltd.; average particle diameter: 20 µm) were mixed using a mixer, and then compression-molded by a compression molding machine at 10 to 20 MPa. The obtained molded products were then sintered in a baking oven at a temperature equal to or higher than the melting point, thereby producing cubic test pieces (4 x 4 x 4 mm).

The obtained test pieces were allowed to stand on a lower electrode in a vacuum chamber of a low-pressure plasma device, and the inside of the vacuum chamber was evacuated until the degree of vacuum in the vacuum chamber reached 10 Pa by a vacuum pump. Argon gas was introduced when this vacuum degree is achieved. While the pressure in the vacuum chamber was maintained at about 60 Pa, electric power of 200 W was supplied to an upper electrode for 5 minutes from a high-frequency power supply with a frequency of 13.56 MHz to convert the argon gas into plasma, and the PTFE surface was treated for modification.

In the low-pressure plasma device used herein, the upper electrode and the lower electrode were arranged so as to face each other in the upper and lower sides, respectively, in the vacuum chamber equipped with a gas supply section and a gas discharge unit on the external side of the device. The upper electrode was connected to the high-frequency power supply disposed in the outside of the vacuum chamber, and an earth wire was provided from the lower electrode to the outside of the vacuum chamber.

The following two sticking resistance evaluations were performed using the plasma-treated test pieces.

Sticking resistance evaluation A: The plasma-modified PTFE surface (4 x 4 mm) of a test piece, and the non-plasma-modified PTFE surface (4 x 4 mm) of a test piece were superposed and held by a jig. Then, while applying load at a surface pressure of 3 MPa under room temperature conditions, slight vibration was applied at a frequency of 200 Hz for 30 seconds. After removing the jig, the test pieces were pulled vertically to their bonding surfaces, and sticking strength was measured by an autograph.

Sticking resistance evaluation B: Both end parts of each of the plasma-modified PTFE surface of a test piece, and the non-plasma-modified PTFE surface of a test piece were superposed at the above length, and held by a jig. Then, while applying load at a surface pressure of 7 MPa, the test piece was maintained at 160°C for 1 hour. After cooling, the jig was removed, the test pieces were pulled vertically to their bonding surfaces, and sticking strength was measured by an autograph.

### Example 2

In Example 1, the two sticking resistance evaluations were conducted using test pieces where their plasma-modified PTFE surfaces were superposed and held by a jig.

### Example 3

In Example 1, the two sticking resistance evaluations were conducted on test pieces on which plasma modification was performed while the time of supplying high-frequency electric power was changed to 10 minutes.

### Example 4

In Example 3, the two sticking resistance evaluations were conducted using test pieces where their plasma-modified PTFE surfaces were superposed and held by a jig.

### Example 5

In Example 1, the two sticking resistance evaluations were conducted on test pieces on which plasma modification was performed while the time of supplying high-frequency electric power was changed to 20 minutes.

### Example 6

In Example 5, the two sticking resistance evaluations were conducted using test pieces where their plasma-modified PTFE surfaces were superposed and held by a jig.

### Example 7

In Example 1, the two sticking resistance evaluations were conducted using test pieces on which plasma modification was performed using nitrogen gas in place of argon gas.

### Example 8

In Example 7, the two sticking resistance evaluations were conducted using test pieces where their plasma-modified PTFE surfaces were superposed and held by a jig.

### Comparative Example 1

In the sticking resistance evaluations of Example 1, the two sticking resistance evaluations were conducted using test pieces where their non-plasma-modified surfaces were superposed and held by a jig.

Table 1 below shows the results obtained in Examples 1 to 8 and Comparative Example 1.

**Table 1**

| Sticking resistance evaluation | Example | | | | | | | | Comp. Ex. |
|---|---|---|---|---|---|---|---|---|---|
| | 1 | 2 | 3 | 4 | 5 | 6 | 7 | 8 | 1 |
| A (MPa) | 0.01 | 0.00 | 0.00 | 0.00 | 0.02 | 0.00 | 0.04 | 0.00 | 0.10 |
| B (MPa) | 0.20 | 0.25 | 0.12 | 0.26 | 0.09 | 0.12 | 0.36 | 0.37 | 0.65 |

### Examples 9 to 16 and Comparative Example 2

In Examples 1 to 8 and Comparative Example 1, the amount of PTFE was changed to 70 wt.%, the amount of oil coke was changed to 30 wt.%, and glass fiber was not used. Table 2 below shows the obtained results.

**Table 2**

| Sticking resistance evaluation | Example | | | | | | | | Comp. Ex. |
|---|---|---|---|---|---|---|---|---|---|
| | 9 | 10 | 11 | 12 | 13 | 14 | 15 | 16 | 2 |
| A (MPa) | 0.02 | 0.00 | 0.00 | 0.00 | 0.00 | 0.00 | 0.02 | 0.00 | 0.05 |
| B (MPa) | 0.09 | 0.10 | 0.05 | 0.09 | 0.02 | 0.03 | 0.09 | 0.16 | 0.23 |

### Examples 17 to 24 and Comparative Example 3

In Examples 1 to 8 and Comparative Example 1, the amount of PTFE was changed to 67 wt.%, the amount of oil coke was changed to 3 wt.%, and the same amount (30 wt.%) of carbon black (Ketchen Black ECP600JD, produced by Mitsubishi Chemical Corporation) was used in place of glass fiber. Table 3 below shows the obtained results.

**Table 3**

| Sticking resistance evaluation | Example | | | | | | | | Comp. Ex. |
|---|---|---|---|---|---|---|---|---|---|
| | 17 | 18 | 19 | 20 | 21 | 22 | 23 | 24 | 3 |
| A (MPa) | 0.00 | 0.00 | 0.00 | 0.00 | 0.00 | 0.00 | 0.00 | 0.00 | 0.02 |
| B (MPa) | 0.07 | 0.09 | 0.06 | 0.13 | 0.06 | 0.08 | 0.07 | 0.09 | 0.23 |

## Claims

1. A PTFE resin seal ring in which at least one surface of an abutting part that forms a discontinuous part of the seal ring is treated by plasma modification using non-polymerizable gas under pressure conditions of 10 to 500 Pa during plasma irradiation.

2. The PTFE resin seal ring according to claim 1, wherein non-reactive gas is argon, helium, nitrogen or oxygen.

3. The PTFE resin seal ring according to claim 1, wherein the PTFE resin is a filler-containing PTFE resin.

4. The PTFE resin seal ring according to claim 3, wherein the filler-containing PTFE resin is a PTFE resin containing glass fiber, carbon fiber, ceramic fiber, ceramic powder, graphite powder, coke powder, carbon beads, carbon black, or bronze powder.
